# FASCICULE DE BREVET EUROPEEN

(11) **EP 2 924 514 B1**
(45) Date de publication et mention de la délivrance du brevet: **13.09.2017**
(21) Numéro de dépôt: 14161313.3
(22) Date de dépôt: 24.03.2014
(51) Int. Cl.: G04B 1/14, C22C 38/00, C22C 38/38, F16F 1/02

(54) **Ressort d'horlogerie en acier inoxydable austénitique**
Uhrfeder aus austenitischem Edelstahl
Clockwork spring made of austenitic stainless steel

(43) Date de publication de la demande: 30.09.2015
(73) Titulaire: Nivarox-FAR S.A., 2400 Le Locle (CH)
(72) Inventeur: Charbon, Christian, 2054 Chézard-St-Martin (CH); Plankert, Guido, 8113 Boppelsen (CH)
(74) Mandataire: Giraud, Eric

(56) Documents cités:
- WO-A1-2011/007921
- CH-B1- 703 796
- M. Vernot, P. Bovay, D. Prongé, S. Dordor: "Traité de construction horlogère", 2011, PPUR, Suisse, XP002735465, ISBN: 978-2-88074-883-8 pages 24-29, * pages 24-29 *
- AURÈLE MAIRE: JOURNAL SUISSE D'HORLOGERIE, vol. 5/6, 1 janvier 1968 (1968-01-01), pages 213-219, XP002735466,

## Description

### Domaine de l'invention

La présente invention concerne un ressort d'horlogerie réalisé en un alliage d'acier inoxydable comportant une base constituée de fer et de de chrome, arrangé selon une structure austénitique cubique à faces centrées, et comportant du manganèse et de l'azote.

L'invention concerne encore un barillet d'horlogerie comportant au moins un tel ressort.

L'invention concerne encore une pièce d'horlogerie, notamment une montre, incorporant au moins un tel barillet d'horlogerie et/ou un tel ressort.

L'invention concerne le domaine des mouvements d'horlogerie, et en particulier des ressorts-moteurs de barillet, de sonnerie, ou similaire, et des ressorts plats tels que sautoirs, amortisseurs de chocs, ou similaire.

### Arrière-plan de l'invention

La tenue et la longévité des ressorts d'horlogerie, notamment de barillet, est un problème ancien. Les fabricants de ressorts d'horlogerie sont toujours à la recherche de matériaux permettant un gain en durée de vie, essentiellement avec une tenue en fatigue améliorée, et un gain en réserve de marche pour les ressorts d'accumulateurs, ressorts de barillet ou ressorts de sonnerie notamment.

L'utilisation d'aciers à haute teneur en carbone a permis, très tôt, d'obtenir les caractéristiques d'élasticité souhaitées, mais leur sensibilité à la corrosion, conjuguée à une utilisation permanente sous des efforts voisins de leur charge de rupture, a souvent conduit à une rupture dès les premiers points de corrosion. De plus, ces aciers tendent à prendre des déformations permanentes, qui altèrent la réserve de marche, car leur limite d'allongement proportionnel est très inférieure à leur limite d'élasticité.

De nombreux alliages ont été testés, dans les compositions les plus diverses, et avec des traitements différents. Les documents BE 475 783, CH 279 670, et US 647 783 et US 2 524 660 au nom de Elgin proposent des solutions avec l'emploi d'un alliage à base cobalt, d'une combinaison chrome-molybdène, et d'une combinaison de nickel, fer et manganèse, avec des procédés d'élaboration complexes, renchérissant le coût du produit.

Le document WO 2005/045532 au nom de Seiko propose un alliage à base de titane, additionné d'éléments du groupe vanadium.

Certains fabricants ont développé des ressorts avec des couches superficielles différentes du matériau à coeur, comme dans le document WO 02/04836 au nom de Seiko, ou le document CH 383 886 au nom de Sandvik, ou le document CH 330 555 au nom de Fabrique Suisse de Ressorts d'Horlogerie, ou le document EP 2 511 229 au nom de GFD-Diamaze, ou encore le document EP 1 422 436 au nom de CSEM.

Des alliages amorphes sont encore connus du document WO2012/10941au nom de Rolex, avec une forte proportion de bore, ou encore EP 2 133 756 au nom de Rolex (verre métallique), ou encore du document DE 10 2011 001 783 au nom de Vacuumschmelze.

Tous ces matériaux sont extrêmement coûteux, et aucun produit réellement plus efficace que d'autres pour l'application considérée n'est apparu sur le marché.

De nombreux alliages du négoce pourraient, en pure théorie, convenir pour la fabrication de ressorts horlogers, mais leur expérimentation dans des conditions réelles de production se heurte à de nombreuses limitations, ce qui explique la très faible évolution relative aux matériaux utilisés en horlogerie pour la fabrication de ressorts, surtout de type spiral.

Et, de fait, de très nombreux alliages, qui conviendraient sur le papier, et qui conviennent peut-être en macro-mécanique, en électrotechnique, en machines lourdes, ou similaires, se révèlent absolument inexploitables, dès qu'on tente de les transformer dans des dimensions horlogères.

On connaît, du document CH 703 796 au nom de Générale Ressorts, un alliage d'acier inoxydable azoté comportant une base constituée de fer et de chrome, arrangé selon une structure austénitique cubique à faces centrées. L'alliage décrit dans ce document présente une forte concentration en azote en solution (0.75 à 1% d'azote). Lors de la fabrication de l'alliage la concentration en azote en solution est difficile à contrôler de manière précise. Or une faible augmentation de la teneur en azote en solution dans l'alliage peut conduire à une perte de la ductilité de l'alliage, ce qui va à l'encontre de l'effet recherché pour une matériau devant servir de ressort.

Par ailleurs, la teneur en azote a une forte influence sur la cinétique de précipitation des nitrures de chrome, et, lorsque la teneur en azote est de l'ordre de 1%, la vitesse de trempe de l'alliage qui permet d'éviter l'apparition des nitrures est élevée, ce qui rend l'industrialisation des procédés de traitement de ces alliages délicats et coûteux.

De plus, la fabrication de ressorts à partir de tels alliages est très problématique. La gamme classique d'élaboration consiste à transformer une billette coulée d'alliage par forgeage, laminage, avant l'élaboration par étirage ou tréfilage d'un fil machine d'un diamètre de l'ordre de 6 mm, qui est ensuite écroûté et décapé, avant une série de tréfilages et de laminage à froid : en particulier l'opération d'écroûtage et les opérations de tréfilage se révèlent particulièrement difficiles, voire impossibles quand on cherche à obtenir des ressorts de très petite dimension, notamment des ressorts spiraux de barillet d'horlogerie d'épaisseur inférieure à 0,200 mm, ou encore des ressorts-spiraux de mécanisme d'échappement, pouvant avoir une épaisseur de l'ordre de 0,050 mm.

En effet, ces opérations nécessairement effectuées sur le matériau se traduisent par des élévations de température importantes, de plusieurs dizaines ou centaines de degrés Celsius. Or les aciers à l'azote, avec un taux voisin de 1% d'azote ou davantage, sont très sensibles à de telles élévations de température, puisque, dès 200°C environ, peuvent se produire des précipitations de nitrures, ou d'autres composés fragilisants, ce qui interdit toute application horlogère à des alliages dont la composition théorique devrait être satisfaisante pour atteindre les caractéristiques d'élasticité recherchées. La fragilisation se traduit par des fissures dans le fil tréfilé, le rendant impropre au parachèvement.

Une réduction des vitesses d'avance de tréfilage et de laminage peut réduire ces élévations de température, sans toutefois les éliminer; mais ces avances sont alors si faibles que le coût du matériau devient prohibitif pour une utilisation industrielle. En effet, pour passer d'un diamètre de 6 mm à un diamètre de l'ordre de 0,6mm (c'est-à-dire dans un rapport de section de 100 à 1), il faut effectuer entre 30 et 50 opérations successives de tréfilage (il est admis de réduire la section de 9 à 15% à chaque passe), et plutôt environ 50 opérations justement pour limiter les points de chauffe, sans oublier que des opérations de traitement thermique intermédiaires sont également nécessaires.

Les aciers à l'azote sont difficiles à produire, leur mise en oeuvre est délicate et coûteuse, de ce fait ils ont rencontré peu d'engouement dans le domaine de la mécanique générale ou de précision, les seuls domaines d'application connus étant l'orthodontie, les prothèses, et l'électrotechnique (retaining rings de moteurs ou d'alternateurs), donc essentiellement des applications macroscopiques ou de machines lourdes. La théorie leur attribuant des qualités particulières se heurte ainsi à la pratique de réalisation.

Il n'est donc pas possible d'utiliser n'importe quel alliage à l'azote, en raison de ces inconvénients, pour la fabrication de ressorts horlogers, et il importe de réaliser une sélection très particulière de façon à permettre la réalisation d'un matériau, utilisé comme matière première de type fil, typiquement d'un diamètre de l'ordre de 0,60 à 1, 00 mm, qui est transformé ensuite notamment par laminage à froid pour obtenir un ressort de section sensiblement rectangulaire.

La problématique du fabricant de ressorts horlogers est alors de déterminer un alliage avec des compositions convenables en azote et en carbone pour rendre possible l'élaboration, d'abord d'une telle matière première de type fil d'un diamètre de quelques dixièmes de mm, ensuite d'un ressort profilé de section sensiblement rectangulaire et d'une épaisseur de quelques centièmes de mm.

Si une particularité évidente des ressorts horlogers est leur dimensionnement particulier, une autre caractéristique consiste dans leur emploi dans des conditions de fatigue métallurgique très particulières : ces ressorts sont en effet soumis en permanence à des efforts proches de leur limite à la rupture, ce qui correspond à une fatigue de type oligocyclique. Un matériau travaillant ainsi en fatique oligocyclique doit être particulièrement parfait, pour éviter toute rupture prématurée après un nombre de cycles réduit.

Si on examine les alliages qui, en théorie, pourraient convenir à la fabrication de ressorts horlogers, on s'intéresse logiquement aux alliages de type austénitique en structure cubique à faces centrées.

Le document US 6682 582 B1 au nom de Speidel BASF décrit différents alliages, avec une forte proportion de chrome (16 à 22%), de 0,08% à 0,30% en masse de carbone, et de 0,30% à 0,70% en masse d'azote, et moins de 9% de manganèse, et moins de 2% de molybdène.

Le document KR 2009 0092144 au nom de Korea Mach. & Materials Inst. divulgue un alliage manganèse-chrome-nickel-molybdène, avec le total des teneurs en masse du carbone et de l'azote compris entre 0,60% et 0,90%, avec notamment dans certains alliages de la famille une teneur en carbone inférieure à 0,45%, et une teneur en azote inférieure à 0,45%. Le document WO2011/007921 du même institut divulgue une teneur en masse d'azote supérieure ou égale à 0,3%, sous couvert de conditions multiples qui délimitent un domaine N-C restreint et bien particulier, avec n la teneur en carbone supérieure ou égale à 0,3%, le total N+C inférieur ou égal à 1,0%, et le taux C/N compris entre 0,82 et 1.

Le document JP H02 156047 au nom de Nippon Steel Corp décrit un alliage avec 5 à 25% de manganèse, de 15 à 22% de chrome, de 0,10% à 0,30% de carbone, et de 0,3% à 0,6% d'azote.

La sélection d'un alliage pouvant réellement être transformé pour fabriquer un ressort d'horlogerie est difficile, face à l'abondance de la littérature. De très nombreux documents décrivent en effet des alliages, qui, dans la théorie seulement, pourraient convenir, car étant des alliages austénitiques semblant présenter les particularités recherchées, tels le document JP 2004 137 600 A au nom de Nano Gijustu Kenkyusho, le document JP 2009 249 658 A au nom de Daido Steel Co Ltd, le document FR 2 776 306 A1 au nom de Ugine Savoie SA, ou encore le document DE 196 07 828 A1 au nom de VSG EN & Schmiedetechnik GmbH.

Or, on comprend bien que, si tous les alliages décrits dans ces documents pourraient en théorie convenir, très peu satisfont aux exigences de mise en forme de l'homme du métier, qui doit dès lors se livrer à une expérimentation poussée pour effectuer une sélection, et tester chaque alliage sélectionné en conditions réelles de fabrication, ce qui n'est pas à la portée du simple lecteur de ces documents.

Plus particulièrement, un ressort de barillet, élément moteur d'une montre mécanique, est fabriqué à partir d'un ruban métallique, et est enroulé autour d'un axe et logé dans un tambour de barillet. Le document signé Aurèle MAIRE, dans le Journal Suisse d'horlogerie, vol. 5/6, du 1 janvier 1968, pages 213-219, XP001441388, expose une théorie des barillets à rotation rapide, décrivant la forme libre en clé de sol d'un ressort spiral, et l'optimisation de la géométrie pour une énergie disponible maximale.

Le document « Traité de construction horlogère » de MM. Vernot, Bovay, Prongé, Dordor, ISBN 978-2-88074-883-8, publiée en 2011, PPUR, Suisse, décrit aux pages 24 à 29 un exemple de forme géométrique idéale de ressort de barillet.

La fabrication classique d'un ressort spiral, notamment de barillet, à partir d'une matière première de type fil d'un diamètre de quelques dixièmes de mm (qui est en fait déjà un produit transformé au cours d'un processus extrêmement complexe et long tel que décrit plus haut) est réalisée en plusieurs étapes :
- laminage d'un fil métallique pour obtenir un ruban,
- découpe du ruban à une longueur définie, incluant de façon optionnelle la découpe d'une fenêtre à une des extrémités,
- réalisation d'un coquillon à l'extrémité du ruban contenant la fenêtre afin de permettre la fixation du ruban à l'arbre (soit par une fenêtre réalisée dans le ruban si l'arbre contient un crochet, ou bien par friction du ruban sur l'arbre). Cette étape se réalise en deux parties :
- réalisation du premier coquillon qui correspond à un cercle d'un tour ayant un diamètre inférieur à l'axe pour assurer le crochage du crochet dans la fenêtre, ou ce maintien par friction, selon le cas ;
- réalisation d'un deuxième coquillon qui correspond, en pratique, à une spirale de rayon croissant sur environ 0.75 tours afin d'assurer le centrage du coquillon dans le tambour lorsque le ressort est désarmé,
- calandrage du reste du ruban dans le sens inverse du coquillon,
- fixage de la bride,
- mise en tambour.

La particularité du ressort de barillet est que le matériau travaille à sa contrainte maximum tout le long de l'abscisse curviligne grâce à la déformation imposée lors du premier armage. Si le ressort est sorti du tambour, une forme d'équilibre en clé de sol résulte de ce premier armage.

Pour le concepteur horloger qui cherche à réaliser des ressorts avec une bonne tenue et une longévité satisfaisante, et qu'il puisse produire de façon fiable et surtout répétitive, La difficulté est la sélection ou la mise au point d'un alliage permettant d'obtenir les performances requises, et la fabrication de ressorts spiraux comportant au moins une zone d'épaisseur inférieure à 0,200 mm, et/ou comportant au moins une zone de rayon de courbure inférieur à 2,15 mm, et notamment inférieur à 0,75 mm, voire inférieur à 0,60 mm. Le concepteur horloger ne peut donc pas choisir sur catalogue un alliage sur ses seules caractéristiques physiques théoriques, mais il doit expérimenter des gammes de parachèvement particulières, d'une part pour le fil servant de matière première, et d'autre part pour le ressort fini, et déterminer des paramètres propres à la composition et au traitement de l'alliage, qui puissent rendre possible la fabrication de tels fils-ébauches, et de tels ressorts.

### Résumé de l'invention

L'invention a pour but de réaliser un ressort d'horlogerie ou de joaillerie, notamment un ressort de type spiral tel un ressort-moteur de barillet, ou de sonnerie, ou similaire, ou encore un ressort plat tel que sautoir, amortisseur de chocs, ou similaire, présentant une ductilité améliorée, moins coûteux, et plus facile à produire de manière industrielle, par rapport aux alliages usuels pour la fabrication de tels ressorts.

En effet, les alliages dits à haut taux d'azote (supérieur à 1% en masse) connus amènent des propriétés mécaniques élevées, mais sont plus difficiles à transformer, car un alliage à haut taux d'azote est fragile, et la cinétique de précipitation des nitrures de chrome est très rapide, ce qui rend difficile la mise en oeuvre d'un tel alliage.

A cet effet l'invention a pour objet un ressort d'horlogerie ou de joaillerie selon la revendication 1.

L'invention concerne encore un barillet d'horlogerie comportant au moins un tel ressort.

L'invention concerne encore une pièce d'horlogerie, notamment une montre, incorporant au moins un tel barillet d'horlogerie et/ou un tel ressort.

Grâce une faible teneur en azote, on peut maintenir, en ajoutant du carbone, des propriétés mécaniques élevées tout en améliorant la mise en oeuvre industrielle de l'alliage. La faible teneur en azote permet notamment d'améliorer la ductilité de l'alliage. De plus, la présence de carbone supplémentaire peut permettre la formation de carbures améliorant les propriétés mécaniques de l'alliage.

Lorsque cet alliage est utilisé pour la fabrication d'un barillet utilisé comme source d'énergie dans un mouvement horloger mécanique, sa ductilité améliorée permet de réduire le diamètre de coquillonage et par là même d'augmenter, pour un diamètre de tambour de barillet donné, la réserve de marche du mouvement.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée et en perspective, un ressort de barillet selon l'invention, les zones interne de coquillonage et externe de fixation éventuelle de bride n'étant pas détaillées ;
- la figure 2 représente un ressort de barillet selon l'invention, dans sa forme libre en clé de sol, avec une partie sensiblement linéaire dans une zone d'inversion de sens de concavité ;
- la figure 3 illustre, de façon schématisée, une pièce d'horlogerie comportant un barillet équipé d'un ressort selon l'invention.

### Description détaillée des modes de réalisation préférés

L'invention concerne le domaine des mouvements d'horlogerie, et en particulier des ressorts de stockage d'énergie, de rappel, ou d'amortissement : ressort de type spiral tel un ressort-moteur de barillet, ou de sonnerie, ou similaire, ou encore un ressort plat tel que sautoir, amortisseur de chocs, ou similaire.

L'invention doit faire face au problème de la réalisation de ressorts d'horlogerie de très grande longévité, de petites dimensions, et notamment des ressorts spiraux d'épaisseur inférieure à 0,200 mm.

Seule une très longue campagne d'essais permet de tester des alliages théoriquement convenables, et de déterminer le ou les paramètres autorisant la faisabilité dans les performances et dimensions requises.

Tout particulièrement le problème est amplifié quand il s'agit de réaliser un ressort 1 spiral avec une spire interne 11 adaptée, dans le cas d'un barillet, à une bonde ou un arbre 50 de très petit diamètre, inférieur à 4,3 mm, et notamment inférieur à 1,5 mm, voire inférieur à 1,2 mm dans les barillets dits « à diamètre de bonde réduit », ou dans le cas d'un ressort-spiral de mécanisme d'échappement à une virole également de très petit diamètre notamment inférieur à 1,5 mm. Les essais métallurgiques sont notamment concentrés en particulier sur les valeurs maximales d'allongement.

La campagne expérimentale montre que l'aptitude à la fabrication d'un tel ressort spiral est directement liée au rapport C/N, entre les taux en masse dans l'alliage du carbone et de l'azote, qui doit être encadrée dans une fourchette spécifique, ainsi qu'aux limites absolues et relatives des teneurs en carbone et en azote. Cette fabrication comporte classiquement une gamme d'ébauche comportant une transformation d'une billette coulée d'alliage par forgeage, laminage, et éventuellement par étirage ou tréfilage pour l'obtention d'un fil machine d'un diamètre de l'ordre de 6 mm, qui est ensuite écroûté et décapé, avant une série d'autres tréfilages séparés par des traitements thermiques de recristallisation. Une gamme de finition s'ensuit, qui peut comporter au moins un autre tréfilage, et au moins un laminage à froid, puis des opérations de finition propres à la mise en géométrie du spiral, notamment selon un profil libre de type dit en clé de sol.

Le cas de la fabrication d'un ressort 1 d'horlogerie spiral comporte la difficulté inhérente à la réalisation d'au moins une zone de très faible rayon de courbure, notamment un rayon de courbure inférieur à 2,15 mm.

Un cas particulier est celui d'un barillet dit à bonde réduite, c'est-à-dire présentant un facteur K inférieur à 9 : lors de la fabrication usuelle d'un ressort de barillet, par expérience, le facteur K (quotient du rayon de l'axe du barillet par l'épaisseur du ruban du ressort) se situe entre 9 et 16 pour s'assurer que le produit ne soit pas fragile et pour permettre sa réalisation. La théorie de l'horlogerie préconise d'avoir un facteur K entre 10 et 16, la valeur 11 étant la plus couramment utilisée. Toute réduction du facteur K permet d'augmenter sensiblement le nombre de tours du ressort de barillet, à volume extérieur égal, et donc d'augmenter la réserve de marche de la montre. Cette réduction est liée à la minimisation du diamètre de la bonde, très en-dessous de la valeur de 2,15 mm, et notamment sous la valeur de 1,5 mm, ce qui impose que l'alliage choisi, ainsi que son traitement, autorisent la réalisation de rayons de courbure aussi faibles que 2,15 mm ou moins, sans casse ni fragilisation à terme du ressort. La problématique est similaire pour un ressort-spiral de mécanisme d'échappement, dont la spire interne prend appui sur une virole de dimensions comparables à celles de la bonde d'un ressort de barillet.

L'invention permet de définir un alliage d'acier convenant à la fabrication de ressorts d'horlogerie, notamment pour ressort spiral de barillet ou de mécanisme d'échappement, présentant une ductilité améliorée par rapport aux alliages de l'art antérieur.et plus facile à produire de manière industrielle que ces derniers.

L'invention concerne un ressort de 1 d'horlogerie ou de joaillerie réalisé en un alliage d'acier inoxydable comportant une base constituée de fer et de chrome, arrangé selon une structure austénitique cubique à faces centrées, et comportant du manganèse et de l'azote.

Selon l'invention, ce ressort 1 présente, au moins dans sa zone d'épaisseur la plus faible, une épaisseur inférieure à 0,20 mm.

Selon l'invention, la composition en masse de l'alliage de ce ressort 1 est :
- chrome : valeur mini 15%, valeur maxi 25 % ;
- manganèse : valeur mini 5%, valeur maxi 25 % ;
- azote: valeur mini 0,10%, valeur maxi 0.90% ;
- carbone : valeur mini 0.10%, valeur maxi 1,00 % ;
- avec le total (C+N) des teneurs en masse du carbone et de l'azote en proportion du total compris entre 0,40% et 1,50% ;
- avec le rapport (C/N) de la teneur en masse du carbone en proportion du total par rapport à celle de l'azote compris entre 0,125 et 0,550 ;
- impuretés et métaux d'apport à l'exception du fer: valeur mini 0%, valeur maxi 12,0% ;
- fer : le complément à 100 %.

Plus particulièrement, le total du carbone et de l'azote est compris entre 0,4% et 1,5%, et le rapport du carbone sur l'azote est compris entre 0,125 et 0.5.

Dans une réalisation particulière, la teneur en masse de l'azote est comprise entre 0,40% et 0,75%.

Dans une réalisation plus particulière, la teneur en masse de l'azote est comprise entre 0,45% et 0,55%.

Dans une réalisation particulière, la teneur en masse du carbone est comprise entre 0,15% et 0,30%.

Dans une réalisation plus particulière, la teneur en masse du carbone est comprise entre 0,15% et 0,25%.

Dans une réalisation particulière, le total (C+N) des teneurs en masse du carbone et de l'azote en proportion du total est compris entre 0,60% et 1,00%.

Dans une réalisation plus particulière, le total (C+N) des teneurs en masse du carbone et de l'azote en proportion du total est compris entre 0,60% et 0,80%.

Dans une réalisation particulière, le rapport (C/N) de la teneur en masse du carbone en proportion du total par rapport à celle de l'azote est compris entre 0,250 et 0,550.

Dans une réalisation plus particulière, le rapport (C/N) de la teneur en masse du carbone en proportion du total par rapport à celle de l'azote est compris entre 0,270 et 0,550.

Plus particulièrement, le total du carbone et de l'azote est compris entre 0,4% et 1,5%, et le rapport du carbone sur l'azote est compris entre 0,125 et 0.5.

Le choix du domaine où, à la fois :
- le total (C+N) des teneurs en masse du carbone et de l'azote en proportion du total est compris entre 0,60% et 0,80%, et
- le rapport (C/N) de la teneur en masse du carbone en proportion du total par rapport à celle de l'azote est compris entre 0,270 et 0,550,
est particulièrement favorable en ce qui concerne la valeur de l'énergie de défaut d'empilement (stacking fault energy).

Selon une variante avantageuse, le total en masse du carbone et de l'azote de l'alliage est compris entre 0,6% et 1%, et le rapport du carbone sur l'azote de l'alliage est compris entre 0,35 et 0,5.

Selon une variante préférée le total du carbone et de l'azote de l'alliage est compris entre 0,75% et 1%, et le rapport du carbone sur l'azote de l'alliage est compris entre 0,4 et 0,5.

Dans une réalisation particulière, la teneur en masse du chrome, qui est présent pour assurer la résistance à la corrosion (qui est historiquement un problème majeur pour la tenue des ressorts d'horlogerie, notamment de barillet), est comprise entre 16,0% et 20,0%.

Dans une réalisation particulière, la teneur en masse du chrome est comprise entre 16,0% et 17,0%.

Selon un mode de réalisation avantageux la teneur en chrome de l'alliage est comprise entre 16% et 20% en masse du total et la teneur en carbone est comprise entre 0.15% et 0.3% en masse du total.

Selon un autre mode de réalisation avantageux, la teneur en manganèse de l'alliage est comprise entre 10% et 16% en masse du total et de préférence de 11% à 13% en masse du total et de préférence, sa teneur en niobium est inférieure à 0,25% en masse du total.

Selon une composition particulière, au moins un desdits métaux d'apport est un élément carburigène pris parmi un ensemble comportant le molybdène, le tungstène, le vanadium, le niobium, le zirconium, et le titane, en remplacement d'une masse équivalente de fer dans l'alliage, avec une teneur en masse comprise entre 0,5% et 10,0 %. Les impuretés et autres métaux d'apport à l'exception du fer sont alors limités à 3%, et notamment à 2%.

Dans une réalisation particulière, cet au moins un élément carburigène est du molybdène, avec une teneur en masse comprise entre 2,5% et 4,2 %. Le molybdène permet d'améliorer la résistance à la corrosion et à la piqûration; il permet la précipitation de carbures de molybdène. Dans une réalisation plus particulière, la teneur en masse du molybdène est comprise entre 2,6% et 2,8%.

Selon encore un autre mode de réalisation l'alliage comporte encore, dans la limite de 0,5% en masse du total, au moins un autre élément carburigène que le molybdène, pris parmi un ensemble comportant le tungstène, le vanadium, le niobium, le zirconium, et le titane, en remplacement d'une masse équivalente de fer dans l'alliage, et l'alliage comporte de préférence moins de 0,5% en masse de nickel.

Dans une réalisation particulière, le total des teneurs en masse des impuretés et des métaux d'apport à l'exception du fer est compris entre 0 et 6,0%.

Dans une réalisation particulière, le total des teneurs en masse des impuretés et des métaux d'apport à l'exception du fer est compris entre 0 et 3,0%.

Dans une réalisation particulière, un des métaux d'apport est du nickel. Le nickel favorise, comme le manganèse, la constitution d'une phase austénitique, et améliore la solubilité. Pour une application à un ressort enfermé dans un mouvement, sans contact cutané avec l'utilisateur, il est possible d'inclure quelques pour cent de nickel dans l'alliage sans conséquence négative pour l'utilisateur. Dans une réalisation particulière, la teneur en masse du nickel est comprise entre 0 et 0,10%.

Dans une réalisation particulière, un des métaux d'apport est du niobium, avec une teneur en masse comprise entre 0 et 0,25 %.

La structure austénitique d'un tel alliage est en effet nécessaire pour un ressort, en raison de la bonne déformabilité à froid qu'elle autorise. Elle présente un autre avantage, qui est loin d'être négligeable au coeur d'un mouvement d'horlogerie, lié au caractère amagnétique de l'austénite, contrairement à la ferrite ou à la martensite.

Là encore, le choix d'un taux C/N relativement bas, notamment inférieur à 0,550, suffit à profiter des avantages liés à la présence du carbone, et montre, en comparaison d'un taux C/N supérieur, pour un même total C+N, une aptitude supérieure de l'alliage à prendre une structure austénitique, comme on peut le voir sur des diagrammes d'équilibre de la littérature. De la même façon, un taux d'azote pas trop bas permet de se maintenir éloigné du domaine ferritique.

L'invention permet une fabrication de ressorts d'horlogerie qui est plus économique que celle des ressorts connus de l'art antérieur, qui ont un taux élevé d'azote qui rend leur transformation difficile et coûteuse. En effet, dans ce cas, les procédés d'élaboration doivent être conduits sous une pression élevée (plusieurs atmosphères) ou/et avec des additifs.

C'est pourquoi il est avantageux de remplacer une partie de l'azote par du carbone. Il est connu que la température de transition TT fragile-ductile d'un alliage inoxydable tel que considéré suit approximativement une règle selon laquelle la valeur de TT en Kelvin est proportionnelle au total d'un premier terme égal à 300 fois la teneur en azote et d'un second terme égal à 100 fois la teneur en carbone.

Tout remplacement d'azote par du carbone a donc une influence directe avec une diminution de cette température de transition fragile-ductile. En effet, l'utilisation d'une teneur en azote faible, au niveau de la plus faible teneur en azote des alliages connus de l'art antérieur, permet de maintenir, en ajoutant du carbone, des propriétés mécaniques élevées, par la formation de carbures, tout en améliorant la mise en oeuvre industrielle de l'alliage. La faible teneur en azote permet notamment d'améliorer la ductilité de l'alliage. La réduction du taux d'azote est, encore, favorable en ce qui concerne la précipitation des nitrures.

Lorsque on utilise un alliage selon l'invention pour la fabrication d'un ressort de barillet utilisé comme source d'énergie dans un mouvement horloger mécanique, on bénéficie de sa ductilité améliorée, qui permet de réduire le diamètre de coquillonage, et par là-même, d'augmenter la réserve de marche du mouvement, pour un diamètre de tambour de barillet donné.

En ce qui concerne la réalisation industrielle, l'élaboration d'un alliage avec à la fois du carbone et de l'azote, dans ces quantités et proportions, peut être conduite à la pression atmosphérique, ce qui représente un avantage économique certain. Ces taux particuliers de carbone et d'azote, sélectionnés pour l'invention, représentent un bon compromis, où l'alliage comporte assez d'azote pour stabiliser la structure austénitique, et ces compositions particulières donnent les alliages les plus stables.

En sélectionnant des réalisations particulières de l'alliage, on obtient une composition particulière ci-après, convenant particulièrement bien aux ressorts d'horlogerie et plus particulièrement de barillet, avec une élaboration avec un coût acceptable, une mise en oeuvre sans complication particulière, de très bonnes caractéristiques mécaniques, une bonne résistance à la corrosion, de faibles déformations plastiques, et une grande longévité. Cette composition particulière est, en masse :
- chrome : valeur mini 16,0%, valeur maxi 17,0 % ;
- manganèse : valeur mini 9,5%, valeur maxi 12,5 % ;
- azote: valeur mini 0,45%, valeur maxi 0.55% ;
- carbone: valeur mini 0.15%, valeur maxi 0,25 % ;
- avec le total (C+N) des teneurs en masse du carbone et de l'azote en proportion du total compris entre 0,60% et 0,80% ;
- avec le rapport (C/N) de la teneur en masse du carbone en proportion du total par rapport à celle de l'azote compris entre 0,27 et 0,55;
- molybdène: valeur mini 2,6%, valeur maxi 2,8% ;
- impuretés et métaux d'apport à l'exception du fer: valeur mini 0%, valeur maxi 3,0% ;
- fer : le complément à 100 %.

Le ressort 1 ainsi réalisé est de structure austénitique à haute résistance mécanique, et présente une haute résistance à la fatigue, une haute résistance à la corrosion, et est amagnétique.

Dans une application de type ressort spiral d'horlogerie, de barillet ou de mécanisme d'échappement, ce ressort 1 comporte au moins une zone avec un rayon de courbure inférieur à 2,15 mm.

Dans une application avantageuse, le ressort 1 selon l'invention est un ressort spiral, et notamment un ressort spiral de barillet ou un ressort-spiral de mécanisme d'échappement.

Plus particulièrement, ce ressort 1 comporte une spire interne 11 qui comporte un rayon de courbure inférieur à 2,15 mm, notamment inférieur à 0,75mm.

Plus particulièrement, ce ressort 1 présente, au moins dans sa zone d'épaisseur la plus faible, et notamment au niveau de cette spire interne 11, une épaisseur inférieure à 0,20 mm, notamment inférieure à 0,06 mm.

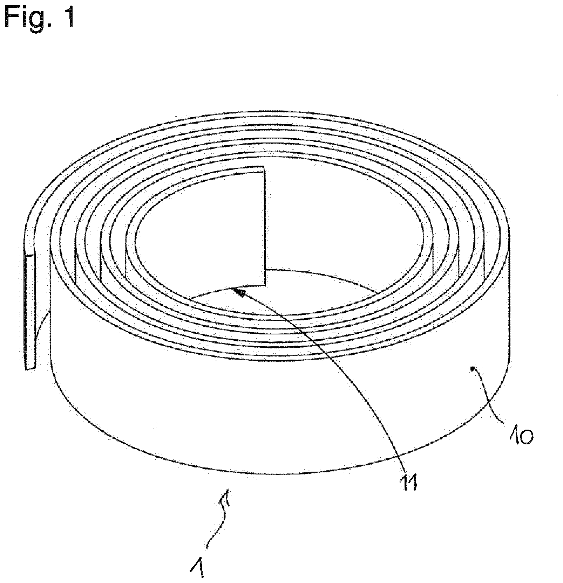

La figure 1 représente le cas particulier où le ressort 1 est un ressort spiral 10 de barillet.

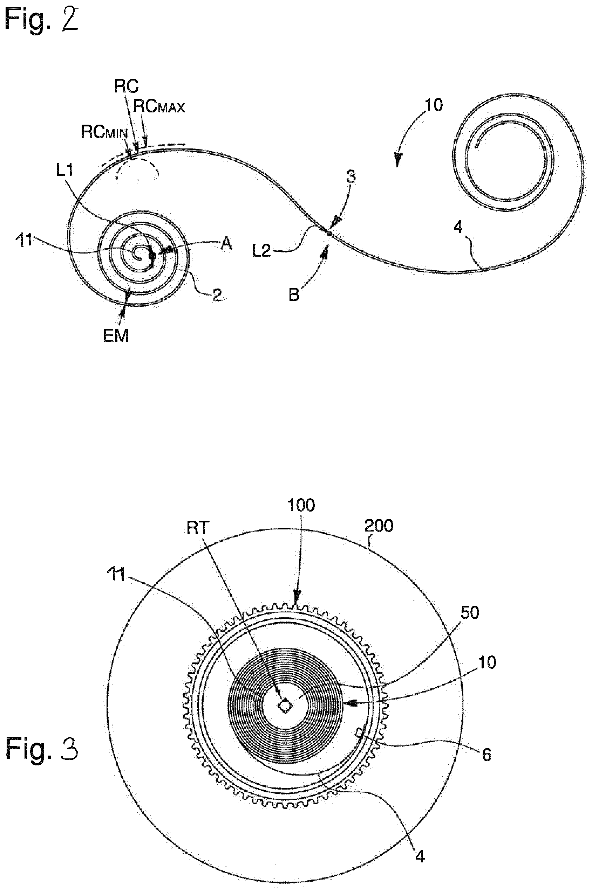

La figure 2 illustre un ressort 10 de barillet d'horlogerie pour l'enroulement en spirale autour d'un arbre 50, et comportant une lame avec une première spire interne 11 formant premier coquillon, d'une première longueur L1 entre son extrémité interne et un point A visible sur la figure 2, et qui est adaptée à un tel arbre 50 de rayon théorique RT donné.

On appellera indifféremment, dans la suite de l'exposé:
- première spire 1 ou premier coquillon, pour désigner la spire la plus interne du ressort de barillet, qui est destinée à enserrer l'arbre de barillet sur un tour, et
- deuxième spire 2 ou deuxième coquillon, la partie du ressort qui vient directement en aval de cette première spire, de même sens de concavité que cette première spire 1, dans un état initial de sortie de fabrication, et avant tout montage sur un tel arbre et avant tout armage, à l'état libre et à plat, du ressort de barillet selon l'invention.

On appellera côté amont du ressort celui de sa spire interne 11 du côté de sa fixation sur l'arbre de barillet, et côté aval celui de sa spire externe 4 s'accrochant au tambour de barillet.

Selon l'invention, dans un état initial de sortie de fabrication, et avant tout montage sur un tel arbre 50 et avant tout armage, à l'état libre et à plat, ce ressort 10 comporte, de l'intérieur vers l'extérieur, suite à la première spire interne 11, une deuxième spire 2 de deuxième longueur L2 (entre le point A et un point B d'inflexion visible sur la figure 2), de même sens de concavité que la première spire interne 11.

A cette deuxième spire 2 succède, au travers d'une zone d'inflexion 3, un enroulement 4 de sens de concavité opposé à celui de la spire interne 11.

Et la forme du ressort 10 selon l'invention comporte, en tout point hors de cette zone d'inflexion 3, un rayon de courbure RC local qui est compris entre un rayon de courbure minimum RCMIN local et un rayon de courbure maximum RCMAX local.

Ce rayon de courbure RC local est supérieur au rayon de courbure minimum RCMIN local pour assurer que la lame du ressort 10 soit sollicitée à sa contrainte maximale en tout point de son abscisse curviligne dès son premier armage.

Et ce rayon de courbure RC local est inférieur au rayon de courbure maximum RCMAX local pour assurer que ce ressort 10 ne casse pas lors de sa mise en tambour.

Dans le cas préféré d'un facteur K inférieur à 9, la deuxième longueur L2 de ladite deuxième spire 2 est calculée pour l'obtention d'un rapport prédéterminé entre le rayon théorique RT d'une part, et l'épaisseur moyenne EM du ressort 10 au niveau de la première spire interne 11 d'autre part, ce rapport prédéterminé étant inférieur à 9.

Afin de pouvoir fabriquer un ressort de barillet à bonde réduite (facteur K très inférieur à 9), il faut réaliser un premier coquillon standard suivi d'un deuxième coquillon de plus de 0.75 tours afin de ne pas dépasser la limite à la rupture du matériau lors de la mise en tambour.

Notamment, dans une application particulière à un ressort 10 réalisé dans un tel alliage selon l'invention, la deuxième longueur développée L2 de la deuxième spire 2 correspond à une spirale d'au moins au moins un tour du ressort 10, de façon à réduire la sollicitation de ce ressort 10 lors de son premier armage de mise en service pour sa mise dans un état dit de service, et de façon à réduire le plus possible la différence locale de courbure en tout point entre ledit état initial et ledit état de service.

En variante, il est possible d'agir sur d'autres paramètres, notamment et non limitativement :
- l'amincissement de la lame près du coquillon ;
- l'application d'un traitement thermique particulier près du coquillon pour améliorer la ductilité du matériau ;
- la constitution de l'alliage constituant le ressort.

L'invention permet d'aller au-delà du domaine d'utilisation habituel, pour un ressort réalisé dans un matériau donné.

L'invention permet de mettre en oeuvre un facteur K encore plus bas que les facteurs connus, pour un matériau donné.

Dans l'application particulière de l'invention à un barillet à bonde réduite, ce rapport prédéterminé K est inférieur à 9, et de préférence voisin de 5 ou 6.

Un facteur K très bas est très favorable car il permet d'augmenter la réserve de marche du barillet correspondant. En effet, le volume gagné se traduit par une augmentation du nombre de tours de développement du ressort de barillet.

De façon particulière, la deuxième longueur développée L2 de la deuxième spire 2 correspond à au moins deux tours du ressort 10, de façon à réduire la sollicitation du ressort 10 lors de son premier armage de mise en service pour sa mise dans un état dit de service, et de façon à réduire le plus possible la différence locale de courbure en tout point entre l'état initial et l'état de service.

L'invention concerne encore un barillet 100 d'horlogerie comportant un arbre 50 de rayon théorique RT donné, et au moins un tel ressort 10.

L'invention concerne encore une pièce d'horlogerie 200 comportant au moins un tel barillet 100, et/ou au moins un tel ressort 1 ou un tel ressort spiral 10 selon l'invention.

## Revendications

1. Ressort (1) d'horlogerie ou de joaillerie réalisé en un alliage d'acier inoxydable comportant une base constituée de fer et de chrome, arrangé selon une structure austénitique cubique à faces centrées, et comportant du manganèse et de l'azote, ledit ressort (1) présentant au moins dans sa zone d'épaisseur la plus faible, une épaisseur inférieure à 0,20 mm, et où la composition en masse dudit alliage est :
- chrome : valeur mini 15%, valeur maxi 25 % ;
- manganèse : valeur mini 5%, valeur maxi 25 % ;
- carbone : valeur mini 0.10%, valeur maxi 1,00 % ;
- avec le total (C+N) des teneurs en masse du carbone et de l'azote en proportion du total compris entre 0,40% et 1,50% ;
- avec le rapport (C/N) de la teneur en masse du carbone en proportion du total par rapport à celle de l'azote compris entre 0,125 et 0,550 ;
- impuretés et métaux d'apport à l'exception du fer: valeur mini 0%, valeur maxi 12,0% ;
- fer : le complément à 100 %, **caractérisé en ce que** la composition en masse dudit alliage comporte en outre : - azote : valeur mini 0,40%, valeur maxi 0,75%.

2. Ressort (1) selon la revendication 1, **caractérisé en ce que** la teneur en masse de l'azote est comprise entre 0,45% et 0,55%.

3. Ressort (1) selon l'une des revendications précédentes, **caractérisé en ce que** la teneur en masse du carbone est comprise entre 0,15% et 0,30%.

4. Ressort (1) selon la revendication précédente, **caractérisé en ce que** la teneur en masse du carbone est comprise entre 0,15% et 0,25%.

5. Ressort (1) selon l'une des revendications précédentes, **caractérisé en ce que** le total (C+N) des teneurs en masse du carbone et de l'azote en proportion du total est compris entre 0,60% et 1,00%.

6. Ressort (1) selon la revendication précédente, **caractérisé en ce que** le total (C+N) des teneurs en masse du carbone et de l'azote en proportion du total est compris entre 0,60% et 0,80%.

7. Ressort (1) selon l'une des revendications précédentes, **caractérisé en ce que** le rapport (C/N) de la teneur en masse du carbone en proportion du total par rapport à celle de l'azote est compris entre 0,250 et 0,550.

8. Ressort (1) selon la revendication précédente, **caractérisé en ce que** le rapport (C/N) de la teneur en masse du carbone en proportion du total par rapport à celle de l'azote est compris entre 0,270 et 0,550.

9. Ressort (1) selon l'une des revendications précédentes, **caractérisé en ce que** la teneur en masse du manganèse est comprise entre 9,5% et 12,5%.

10. Ressort (1) selon l'une des revendications précédentes, **caractérisé en ce que** la teneur en masse du chrome est comprise entre 16,0% et 20,0%.

11. Ressort (1) selon la revendication précédente, **caractérisé en ce que** la teneur en masse du chrome est comprise entre 16,0% et 17,0%.

12. Ressort (1) selon l'une des revendications précédentes, **caractérisé en ce qu'**au moins un desdits métaux d'apport est un élément carburigène pris parmi un ensemble comportant le molybdène, le tungstène, le vanadium, le niobium, le zirconium, et le titane, avec une teneur en masse comprise entre 0,5% et 10,0 %.

13. Ressort (1) selon la revendication précédente, **caractérisé en ce qu'**un desdits métaux d'apport est du molybdène, avec une teneur en masse comprise entre 2,5% et 4,2 %.

14. Ressort (1) selon la revendication précédente, **caractérisé en ce que** la teneur en masse du molybdène est comprise entre 2,6% et 2,8%.

15. Ressort (1) selon la revendication 13 ou 14, **caractérisé en ce que** ledit alliage comporte encore, dans la limite de 0,5% en masse du total de l'alliage, au moins un autre élément carburigène que le molybdène, pris parmi un ensemble comportant le tungstène, le vanadium, le niobium, le zirconium, et le titane.

16. Ressort (1) selon l'une des revendications précédentes, **caractérisé en ce que** le total des teneurs en masse desdites impuretés et desdits métaux d'apport à l'exception du fer est compris entre 0 et 6,0%.

17. Ressort (1) selon la revendication précédente, **caractérisé en ce que** le total des teneurs en masse desdites impuretés et desdits métaux d'apport à l'exception du fer est compris entre 0 et 3,0%.

18. Ressort (1) selon l'une des revendications précédentes, **caractérisé en ce qu'**un desdits métaux d'apport est du nickel.

19. Ressort (1) selon la revendication précédente, **caractérisé en ce que** la teneur en masse du nickel est comprise entre 0 et 0,10%.

20. Ressort (1) selon l'une des revendications précédentes, **caractérisé en ce qu'**un desdits métaux d'apport est du niobium, avec une teneur en masse comprise entre 0 et 0,25 %.

21. Ressort (1) selon l'une des revendications précédentes, caractérisé en ce sa composition en masse est :
- chrome : valeur mini 16,0%, valeur maxi 17,0 % ;
- manganèse : valeur mini 9,5%, valeur maxi 12,5 % ;
- azote: valeur mini 0,45%, valeur maxi 0.55% ;
- carbone : valeur mini 0.15%, valeur maxi 0,25 % ;
- avec le total (C+N) des teneurs en masse du carbone et de l'azote en proportion du total compris entre 0,60% et 0,80% ;
- avec le rapport (C/N) de la teneur en masse du carbone en proportion du total par rapport à celle de l'azote compris entre 0,27 et 0,55;
- molybdène : valeur mini 2,6%, valeur maxi 2,8% ;
- impuretés et métaux d'apport à l'exception du fer: valeur mini 0%, valeur maxi 3,0% ;
- fer : le complément à 100 %.

22. Ressort (1) selon l'une des revendications précédentes, **caractérisé en ce que** ledit ressort (1) comporte au moins une zone avec un rayon de courbure inférieur à 2,15 mm.

23. Ressort (1) selon l'une des revendications précédentes, **caractérisé en ce que** ledit ressort (1) est un ressort spiral qui comporte une spire interne (11) comportant un rayon de courbure inférieur à 2,15 mm.

24. Ressort (1) selon la revendication 22 ou 23, **caractérisé en ce que** ledit ressort (1) comporte au moins une zone avec un rayon de courbure inférieur à 0,75 mm.

25. Ressort (1) selon l'une des revendications précédentes, **caractérisé en ce qu'**il est un ressort spiral qui présente, au moins dans sa zone d'épaisseur la plus faible au niveau de sa spire interne (11), une épaisseur inférieure à 0,20 mm.

26. Ressort (1) selon l'une des revendications précédentes, **caractérisé en ce qu'**il est un ressort de barillet.

27. Ressort (1) selon la revendication 26, pour l'enroulement en spirale autour d'un arbre (50) et comportant une lame avec une première spire interne (11) formant premier coquillon, d'une première longueur (L1), et adaptée à un dit arbre (50) de rayon théorique (RT) donné, **caractérisé en ce que**, dans un état initial de sortie de fabrication, et avant tout montage sur un tel arbre (50) et avant tout armage, à l'état libre et à plat, ledit ressort (1) comporte, de l'intérieur vers l'extérieur, suite à ladite première spire interne (11), une deuxième spire (2) de deuxième longueur (L2) de même sens de concavité que ladite première spire interne (11), à laquelle succède, au travers d'une zone d'inflexion (3), un enroulement (4) de sens de concavité opposé à celui de ladite spire interne (11), et **en ce que** ladite deuxième longueur développée (L2) de ladite deuxième spire (2) correspond à une spirale d'au moins au moins un tour dudit ressort (1) de façon à réduire la sollicitation dudit ressort (1) lors de son premier armage de mise en service pour sa mise dans un état dit de service, et de façon à réduire le plus possible la différence locale de courbure en tout point entre ledit état initial et ledit état de service.

28. Ressort (1) selon la revendication 27, **caractérisé en ce que** ladite deuxième longueur développée (L2) de ladite deuxième spire (2) correspond à au moins deux tours dudit ressort (1).

29. Barillet (100) d'horlogerie comportant un arbre (50) de rayon théorique (RT) donné, et au moins un ressort (1) selon la revendication 27 ou 28.

30. Montre (200) comportant au moins un barillet (100) selon la revendication précédente et/ou un ressort (1) selon l'une des revendications 1 à 28.

## Patentansprüche

1. Uhr- oder Schmuckfeder (1), die aus einer Edelstahllegierung mit einer Basis, die aus Eisen und Chrom gebildet ist, die gemäß einer kubisch flächenzentrierten austenitischen Struktur angeordnet ist, und mit Mangan und Stickstoff hergestellt ist,
wobei die Feder (1) zumindest in ihrem Bereich mit geringster Dicke eine Dicke von weniger als 0,20 mm aufweist,
und wobei die Massenzusammensetzung der Legierung Folgende ist:
- Chrom: Minimalwert 15 %, Maximalwert 25 %;
- Mangan: Minimalwert 5 %, Maximalwert 25 %;
- Kohlenstoff: Minimalwert 0,10 %, Maximalwert 1,00 %;
- wobei der Gesamtbetrag (C+N) des Massengehalts von Kohlenstoff und Stickstoff im Verhältnis zur Gesamtmasse zwischen 0,40 % und 1,50 % liegt;
- wobei das Verhältnis (C/N) des Massengehalts von Kohlenstoff im Verhältnis zur Gesamtmasse in Bezug auf jenen von Stickstoff zwischen 0,125 und 0,550 liegt;
- Verunreinigungen und Zusatzmetalle mit Ausnahme von Eisen: Minimalwert 0 %, Maximalwert 12,0 %;
- Eisen: die Vervollständigung auf 100 %,
**dadurch gekennzeichnet, dass** die Massenzusammensetzung der Legierung ferner umfasst:
- Stickstoff: Minimalwert 0,40 %, Maximalwert: 0,75 %.

2. Feder (1) nach Anspruch 1, **dadurch gekennzeichnet, dass** der Massengehalt von Stickstoff zwischen 0,45 % und 0,55 % liegt.

3. Feder (1) nach einem der vorangehenden Ansprüche, **dadurch gekennzeichnet, dass** der Massengehalt von Kohlenstoff zwischen 0,15 % und 0,30 % liegt.

4. Feder (1) nach dem vorangehenden Anspruch, **dadurch gekennzeichnet, dass** der Massengehalt von Kohlenstoff zwischen 0,15 % und 0,25 % liegt.

5. Feder (1) nach einem der vorangehenden Ansprüche, **dadurch gekennzeichnet, dass** der Gesamtbetrag (C+N) des Massengehalts von Kohlenstoff und Stickstoff im Verhältnis zur Gesamtmasse zwischen 0,60 % und 1,00 % liegt.

6. Feder (1) nach dem vorangehenden Anspruch, **dadurch gekennzeichnet, dass** der Gesamtbetrag (C+N) des Massengehalts von Kohlenstoff und Stickstoff im Verhältnis zur Gesamtmasse zwischen 0,60 % und 0,80 % liegt.

7. Feder (1) nach einem der vorangehenden Ansprüche, **dadurch gekennzeichnet, dass** das Verhältnis (C/N) des Massengehalts von Kohlenstoff im Verhältnis zur Gesamtmasse in Bezug auf jenen von Stickstoff zwischen 0,250 und 0,550 liegt.

8. Feder (1) nach dem vorangehenden Anspruch, **dadurch gekennzeichnet, dass** das Verhältnis (C/N) des Massengehalts von Kohlenstoff im Verhältnis zur Gesamtmasse in Bezug auf jenen von Stickstoff zwischen 0,270 und 0,550 liegt.

9. Feder (1) nach einem der vorangehenden Ansprüche, **dadurch gekennzeichnet, dass** der Massengehalt von Mangan zwischen 9,5 % und 12,5 % liegt.

10. Feder (1) nach einem der vorangehenden Ansprüche, **dadurch gekennzeichnet, dass** der Massengehalt von Chrom zwischen 16,0 % und 20,0 % liegt.

11. Feder (1) nach dem vorangehenden Anspruch, **dadurch gekennzeichnet, dass** der Massengehalt von Chrom zwischen 16,0 % und 17,0 % liegt.

12. Feder (1) nach einem der vorangehenden Ansprüche, **dadurch gekennzeichnet, dass** mindestens eines der Zusatzmetalle ein Karbid bildendes Element aus einer Gruppe, die Molybdän, Wolfram, Vanadium, Niob, Zirkonium und Titan umfasst, mit einem Massengehalt zwischen 0,5 % und 10,0 % ist.

13. Feder (1) nach dem vorangehenden Anspruch, **dadurch gekennzeichnet, dass** eines der Zusatzmetalle Molybdän mit einem Massengehalt zwischen 2,5 % und 4,2 % ist.

14. Feder (1) nach dem vorangehenden Anspruch, **dadurch gekennzeichnet, dass** der Massengehalt von Molybdän zwischen 2,6 % und 2,8 % liegt.

15. Feder (1) nach einem der Ansprüche 13 oder 14, **dadurch gekennzeichnet, dass** die Legierung ferner bis zu einem Grenzwert von 0,5 Massen-% der Gesamtmasse der Legierung mindestens ein anderes Karbid bildendes Element als Molybdän aus einer Gruppe enthält, die Wolfram, Vanadium, Niob, Zirkonium und Titan umfasst.

16. Feder (1) nach einem der vorangehenden Ansprüche, **dadurch gekennzeichnet, dass** der Gesamtbetrag des Massengehalts der Verunreinigungen und der Zusatzmetalle mit Ausnahme von Eisen zwischen 0 und 6,0 % liegt.

17. Feder (1) nach dem vorangehenden Anspruch, **dadurch gekennzeichnet, dass** der Gesamtbetrag des Massengehalts der Verunreinigungen und der Zusatzmetalle mit Ausnahme von Eisen zwischen 0 und 3,0 % liegt.

18. Feder (1) nach einem der vorangehenden Ansprüche, **dadurch gekennzeichnet, dass** eines der Zusatzmetalle Nickel ist.

19. Feder (1) nach dem vorangehenden Anspruch, **dadurch gekennzeichnet, dass** der Massengehalt von Nickel zwischen 0 und 0,10 % liegt.

20. Feder (1) nach einem der vorangehenden Ansprüche, **dadurch gekennzeichnet, dass** eines der Zusatzmetalle Niob mit einem Massengehalt zwischen 0 und 0,25 % ist.

21. Feder (1) nach einem der vorangehenden Ansprüche, **dadurch gekennzeichnet, dass** ihre Massenzusammensetzung Folgende ist:
- Chrom: Minimalwert 16,0 %, Maximalwert 17,0 %;
- Mangan: Minimalwert 9,5 %, Maximalwert 12,5 %;
- Stickstoff: Minimalwert 0,45 %, Maximalwert 0,55 %;
- Kohlenstoff: Minimalwert 0,15 %, Maximalwert 0,25 %;
- wobei der Gesamtbetrag (C+N) des Massengehalts von Kohlenstoff und Stickstoff im Verhältnis zur Gesamtmasse zwischen 0,60 % und 0,80 % liegt;
- wobei das Verhältnis (C/N) des Massengehalts von Kohlenstoff im Verhältnis zur Gesamtmasse in Bezug auf jenen von Stickstoff zwischen 0,27 und 0,55 liegt;
- Molybdän: Minimalwert 2,6 %, Maximalwert 2,8 %;
- Verunreinigungen und Zusatzmetalle mit Ausnahme von Eisen: Minimalwert 0 %, Maximalwert 3,0 %;
- Eisen: die Vervollständigung auf 100 %.

22. Feder (1) nach einem der vorangehenden Ansprüche, **dadurch gekennzeichnet, dass** die Feder (1) mindestens einen Bereich mit einem Krümmungsradius von weniger als 2,15 mm umfasst.

23. Feder (1) nach einem der vorangehenden Ansprüche, **dadurch gekennzeichnet, dass** die Feder (1) eine Spiralfeder ist, die eine innere Windung (11) mit einem Krümmungsradius von weniger als 2,15 mm umfasst.

24. Feder (1) nach einem der Ansprüche 22 oder 23, **dadurch gekennzeichnet, dass** die Feder (1) mindestens einen Bereich mit einem Krümmungsradius von weniger als 0,75 mm umfasst.

25. Feder (1) nach einem der vorangehenden Ansprüche, **dadurch gekennzeichnet, dass** sie eine Spiralfeder ist, die zumindest in ihrem Bereich mit der geringsten Dicke auf der Höhe ihrer inneren Windung (11) eine Dicke von weniger als 0,20 mm aufweist.

26. Feder (1) nach einem der vorangehenden Ansprüche, **dadurch gekennzeichnet, dass** sie eine Feder eines Federhauses ist.

27. Feder (1) nach Anspruch 26 für das spiralförmige Aufwickeln um eine Welle (50) und umfassend eine Lamelle mit einer ersten inneren Windung (11), die ein erstes Federherz bildet, mit einer ersten Länge (L1), die an eine Welle (50) mit gegebenem theoretischem Radius (RT) angepasst ist, **dadurch gekennzeichnet, dass** in einem anfänglichen Zustand bei der Ausgabe aus der Fertigung und vor jeglicher Montage an einer derartigen Welle (50) und vor jeglichem Spannen, im freien und flachen Zustand die Feder (1) von innen nach außen im Anschluss an die erste innere Windung (11) eine zweite Windung (2) mit einer zweiten Länge (L2) in der gleichen Richtung der Konkavität wie die erste innere Windung (11) umfasst, auf die über einen Wendebereich (3) eine Wicklung (4) mit einer Richtung der Konkavität entgegengesetzt zu jener der inneren Windung (11) folgt, und dass die abgewickelte zweite Länge (L2) der zweiten Windung (2) einer Spirale von mindestens einem Umlauf der Feder (1) entspricht, um die Belastung der Feder (1) bei ihrem ersten Spannen zur Inbetriebnahme, damit sie in einen sogenannten Betriebszustand gesetzt wird, zu verringern und um die lokale Differenz der Krümmung an jedem Punkt zwischen dem anfänglichen Zustand und dem Betriebszustand so weit wie möglich zu verringern.

28. Feder (1) nach Anspruch 27, **dadurch gekennzeichnet, dass** die abgewickelte zweite Länge (L2) der zweiten Windung (2) mindestens zwei Umläufen der Feder (1) entspricht.

29. Uhrfederhaus (100) umfassend eine Welle (50) mit einem gegebenen theoretischen Radius (RT) und mindestens einer Feder (1) nach einem der Ansprüche 27 oder 28.

30. Zeitmessgerät (200), umfassend mindestens ein Federhaus (100) nach dem vorangehenden Anspruch und/oder eine Feder (1) nach einem der Ansprüche 1 bis 28.

## Claims

1. Spring (1) for a timepiece or piece of jewellery made of a stainless steel alloy including a base formed of iron and chromium, arranged in an face centred cubic austenitic structure and including manganese and nitrogen, said spring (1) having, at least in the area of lowest thickness thereof, a thickness of less than 0.20 mm, and wherein the composition by mass of said alloy is:
- chromium : minimum value 15%, maximum value 25 %;
- manganese: minimum value 5%, maximum value 25 %;
- carbon: minimum value 0.10%, maximum value 1.00 %;
- with the total (C+N) carbon and nitrogen content comprised between 0.40% and 1.50% by mass;
- with the carbon-to nitrogen ratio (C/N) comprised between 0.125 and 0.550;
- impurities and additional metals with the exception of iron: minimum value 0%, maximum value 12.0%;
- iron: the complement to 100%;
**characterized in that** the composition by mass of said alloy further includes:
- nitrogen: minimum value 0.40%, maximum value 0.75%.

2. Spring (1) according to claim 1, **characterized in that** the nitrogen content is comprised between 0.45% and 0.55% by mass.

3. Spring (1) according to any of the preceding claims, **characterized in that** the carbon content is comprised between 0.15% and 0.30% by mass.

4. Spring (1) according to the preceding claim, **characterized in that** the carbon content is comprised between 0.15% and 0.25% by mass.

5. Spring (1) according to the preceding claim, **characterized in that** the total (C+N) carbon and nitrogen content is comprised between 0.60% and 1.00% by mass.

6. Spring (1) according to the preceding claim, **characterized in that** the total (C+N) carbon and nitrogen content is comprised between 0.60% and 0.80% by mass.

7. Spring (1) according to any of the preceding claims, **characterized in that** the carbon-to-nitrogen ratio (C/N) is comprised between 0.250 and 0.550.

8. Spring (1) according to the preceding claim, **characterized in that** the carbon-to nitrogen ratio (C/N) is comprised between 0.270 and 0.550.

9. Spring (1) according to any of the preceding claims, **characterized in that** the manganese content is comprised between 9.5% and 12.5% by mass.

10. Spring (1) according to any of the preceding claims, **characterized in that** the chromium content is comprised between 16.0% and 20.0% by mass.

11. Spring (1) according to the preceding claim, **characterized in that** the chromium content is comprised between 16.0% and 17.0% by mass.

12. Spring (1) according to any of the preceding claims, **characterized in that** at least one of said additional metals is a carburising element selected from among a group including molybdenum, tungsten, vanadium, niobium, zirconium and titanium, with a content comprised between 0.5% and 10.0% by mass.

13. Spring (1) according to the preceding claim, **characterized in that** one of said additional metals is molybdenum, with a content of between 2.5% and 4.2% by mass.

14. Spring (1) according to the preceding claim, **characterized in that** the molybdenum content is comprised between 2.6% and 2.8% by mass.

15. Spring (1) according to claim 13 or 14, **characterized in that** said alloy further includes, up to the limit of 0.5% by mass of the total alloy, at least one carburising element other than molybdenum, taken from a group including tungsten, vanadium, niobium, zirconium and titanium.

16. Spring (1) according to any of the preceding claims, **characterized in that** the total content of said impurities and said additional metals, with the exception of iron, is comprised between 0 and 6.0% by mass.

17. Spring (1) according to the preceding claim, **characterized in that** the total content of said impurities and said additional metals, with the exception of iron, is comprised between 0 and 3.0% by mass.

18. Spring (1) according to any of the preceding claims, **characterized in that** one of said additional metals is nickel.

19. Spring (1) according to the preceding claim, **characterized in that** the nickel content is comprised between 0 and 0.10% by mass.

20. Spring (1) according to any of the preceding claims, **characterized in that** one of said additional metals is niobium, with a content of between 0 and 0.25 % by mass.

21. Spring (1) according to any of the preceding claims, **characterized in that** the mass percent composition thereof is:
- chromium : minimum value 16.0%, maximum value 17.0 %;
- manganese: minimum value 9.5%, maximum value 12.5 %;
- nitrogen: minimum value 0.45%, maximum value 0.55%;
- carbon: minimum value 0.15%, maximum value 0.25 %;
- with the total (C+N) carbon and nitrogen content comprised between 0.60% and 0.80% by mass;
- with the carbon-to nitrogen ratio (C/N) comprised between 0.27 and 0.55;
- molybdenum: minimum value 2.6%, maximum value 2.8%;
- impurities and additional metals with the exception of iron: minimum value 0%, maximum value 3.0%;
- iron: the complement to 100%.

22. Spring (1) according to any of the preceding claims, **characterized in that** said spring (1) includes at least one area having a radius of curvature of less than 2.15 mm.

23. Spring (1) according to any of the preceding claims, **characterized in that** said spring (1) is a spiral spring which includes an inner coil (11) having a radius of curvature of less than 2.15 mm.

24. Spring (1) according to claim 22 or 23, **characterized in that** said spring (1) includes at least one area having a radius of curvature of less than 0.75 mm.

25. Spring (1) according to any of the preceding claims, **characterized in that** said spring is a spiral spring which has, at least in the area of smallest thickness thereof on the inner coil (11) thereof, a thickness of less than 0.20 mm.

26. Spring (1) according to any of the preceding claims, **characterized in that** the spring is a mainspring (10).

27. Spring (1) according to claim 26, to be wound in a spiral around an arbor (50) and including a strip with a first inner coil (11) forming a first eye, having a first length (L1), and adapted to a said arbor (50) of given theoretical radius (RT), **characterized in that**, in an initial, post-manufacturing state, and prior to any assembly on a said arbor (50) and prior to being wound, in the free and flat state, said spring (10) includes, from the interior outwards, following said first inner coil (11), a second coil (2) having a second length (L2), of the same direction of concavity as said first inner coil (11), followed in succession, through a bending area (3), by a winding (4) whose direction of concavity is opposite to that of said inner coil (11), and **in that** said second developed length (L2) of said second coil (2) corresponds to a spiral of at least one turn of said spring (1) so as to reduce the stress on said spring (1) when said spring is first wound for operational use to place it in an operational state, and so as to reduce as far as possible the local difference of curvature at any point between said initial state and said operational state.

28. Spring (1) according to claim 27, **characterized in that** said second developed length (L2) of said second coil (2) corresponds to at least two turns of said spring (1).

29. Timepiece barrel (100) including an arbor (50) of given theoretical radius (RT), and at least one spring (1) according to claim 27 or 28.

30. Watch (200) including at least one barrel (100) according to the preceding claim and/or a spring (1) according to any of claims 1 to 28.
